# NEUE EUROPÄISCHE PATENTSCHRIFT

(11) **EP 2 347 148 B2**
(45) Veröffentlichungstag und Bekanntmachung des Hinweises auf die Entscheidung über den Einspruch: **22.11.2023**
(45) Hinweis auf die Patenterteilung: 11.12.2019
(21) Anmeldenummer: 09743855.0
(22) Anmeldetag: 16.10.2009
(51) Int. Cl.: F16H 55/12

(54) **ZAHNRAD UND TROMMELANTRIEB**
TOOTHED WHEEL AND DRUM DRIVE
ROUE DENTÉE ET ENTRAÎNEMENT DE TAMBOUR

(30) Priorität: 03.11.2008 DE 102008054189; 23.12.2008 CN 200820183233 U
(43) Veröffentlichungstag der Anmeldung: 27.07.2011
(73) Patentinhaber: SEW-EURODRIVE GmbH & Co. KG, 76646 Bruchsal (DE)
(72) Erfinder: WU, Zili, 300060 Tianjin (CN)
(86) Internationale Anmeldenummer: PCT/EP2009/007438
(87) Internationale Veröffentlichungsnummer: WO 2010/060505

(56) Entgegenhaltungen:
- DE-A1- 2 157 328
- DE-B3-102006 026 085
- US-A- 2 999 396
- US-A- 3 317 202
- US-A- 4 538 769

## Beschreibung

Die Erfindung betrifft eine Antriebsanordnung und einen Trommelantrieb.

Bei Getrieben sind antreibende Verzahnungsteile bekannt, die im Eingriff stehen mit einer weiteren Verzahnung.

Aus der US 5 890 814 ist ein Trommelantrieb bekannt, bei dem Unterstützungsringe radial beabstandet von der Trommel an dieser befestigt sind. Eine weitere Verzahnung ist separat angebracht.

Aus der DE 2157328 A ist ein in schraubverbindbare Segmente unterteiltes Zahnrad bekannt.

Aus der DE 10 2006 026 085 B3 ist ebenfalls ein segmentierter Zahnkranz mit Innenverzahnung für eine Baumaschine bekannt.

Der Erfindung liegt daher die Aufgabe zugrunde, eine Trommel anzutreiben, die größer ist als die zur Herstellung einer Verzahnung zur Verfügung stehenden Werkzeugmaschinen, insbesondere Verzahnungsmaschinen, oder als die mit solchen Maschinen herstellbare Verzahnung.

Erfindungsgemäß wird die Aufgabe bei der Antriebsanordnung nach den in Anspruch 1 und bei dem Trommelantrieb nach den in Anspruch 15 angegebenen Merkmalen gelöst.

Von Vorteil ist bei der Erfindung, dass das Zahnrad leicht herstellbar und seine Qualität in höherem Masse kontrollierbar ist.

Die Schraubverbindung umfasst jeweils mindestens zwei Passschrauben und mindestens zwei Befestigungsschrauben, insbesondere mindestens drei oder vier Befestigungsschrauben, insbesondere wobei die Befestigungsschrauben Bolzenschrauben sind. Von Vorteil ist dabei, dass das Ausrichten und das feste Verbinden zeitlich nacheinander ausführbar ist.

Erfindungsgemäß ist das Zahnrad aus N Segmenten, insbesondere Ringsegmenten, zusammengesetzt, wobei die Anzahl N zwischen 7 und 25 beträgt und die Verzahnung des Zahnrades ein Modul m aufweist und jedes Segment, insbesondere Ringsegment, weist z Zähne auf, wobei das Produkt z x m einen Wert aus dem Bereich zwischen 340 mm und 440 mm aufweist,
insbesondere wobei das Modul zwischen 10 und 100 mm beträgt. Von Vorteil ist dabei, dass eine besonders hohe Belastung und Drehmomentübertragung ermöglicht ist.

Bei einer vorteilhaften Ausgestaltung weist das Zahnrad ein Modul auf, wobei
- bei einem Modul von 20 mm jedes Ringsegment zwischen 17 und 22 Zähne aufweist,
- bei einem Modul von 25 mm jedes Ringsegment zwischen 13 und 17 Zähne aufweist,
- bei einem Modul von 30 mm jedes Ringsegment zwischen 11 und 14 Zähne aufweist,
- bei einem Modul von 40 mm jedes Ringsegment zwischen 8 und 10 Zähne aufweist.

Von Vorteil ist dabei, dass ebenfalls eine besonders hohe Belastung und Drehmomentübertragung ermöglicht ist.

Erfindungsgemäß sind bei dem Ringsegment, dass das Ringsegment einen in Umfangsrichtung verlaufenden Vorsprung, insbesondere Absatz, aufweist. Von Vorteil ist dabei, dass ein besonders genaues relatives Ausrichtender Segmente zueinander ermöglicht ist.

Von Vorteil ist bei der Erfindung auch, dass nach Zusammensetzen der Ringsegmente zu einem Ring ein Drehen dieses gesamten Rings ausführbar ist und somit durch ein zumindest linear auslenkbares Distanz-Messmittel, wie Messtaster, die radialen und/oder axialen Abweichungen von einem Idealwert erfassbar ist. Auf diese Weise ist dann ein beispielsweise radial zu weit herausstehendes oder radial zu tief liegendes Ringsegment verschiebbar bis es im tolerierten Bereich positioniert ist. Das Verschieben erfolgt vorzugsweise, indem die Befestigungsschrauben etwas gelockert werden und dann mittels Klopfen das Ringsegment verschoben wird. Abschließend werden die Befestigungsschrauben wieder fest angezogen.

Erfindungsgemäß ist der Vorsprung auf kleinerem Radialabstand angeordnet als eine am Ringsegment vorgesehene Verzahnung, insbesondere auf kleinerem Radialabstand als der Fußkreis der Verzahnung. Von Vorteil ist dabei, dass ein von der Verzahnung ungestörtes Drehen des Rings und ein Erfassen der radialen Abweichungen ermöglicht ist.

Erfindungsgemäß ist die Verzahnung eine Evolventenverzahnung. Von Vorteil ist dabei, dass die Verzahnung mit bekannten Werkzeugmaschinen einfach und kostengünstig herstellbar ist.

Erfindungsgemäß ist die Verzahnung aus ADI gefertigt. Von Vorteil ist dabei, dass eine besonders hohe Standzeit der Verzahnung erreichbar ist und außerdem große Kräfte auf sehr kompaktem Raumbereich übertragbar sind, also ein sehr kleines antreibendes Zahnrad als Verzahnungsteil verwendbar ist im Vergleich zum Außendurchmesser der Trommel oder des Außendurchmessers der durch Zusammensetzen der Ringsegmente hergestellten Verzahnung.

Erfindungsgemäß ragt der Vorsprung axial heraus aus dem ihn umgebenden Oberflächenbereich des Ringsegments. Von Vorteil ist dabei, dass somit nicht nur axiale Verschiebungen sondern auch radiale Abweichungen feststellbar sind. Der Vorsprung sollte als geschliffene Fläche ausgeführt sein, wobei insbesondere eine geschliffene Zylindermantelabschnittsfläche vorgesehen sein sollte und ein axial hervorstehender Stirnflächenbereich.

Bei einer vorteilhaften Ausgestaltung weist an seinen in Umfangsrichtung liegenden Endbereichen Stirnflächen mit tangential, also in Umfangsrichtung, verlaufenden Bohrlöchern auf, insbesondere in die Befestigungsschrauben einbringbar sind zur Verbindung mit jeweils einem weiteren gleichartigen Ringsegment. Von Vorteil ist dabei, dass der aus den Ringsegmenten zusammengesetzte Ring insgesamt eine Verzahnung aufweist, die im Bereich des Übergangs zwischen den Ringssegmentbereichen keine wesentlichen Unterbrechungsbereiche aufweist.

Bei einer vorteilhaften Ausgestaltung ist das Ringsegment unterhalb der Verzahnung schwertartig ausgebildet. Von Vorteil ist dabei, dass eine feste tragfähige Unterlage verbindbar ist, die auch formgebend für den aus den Ringsegmenten zusammengesetzten Ring ist.

Bei einer vorteilhaften Ausgestaltung sind im schwertartig ausgebildeten Bereich axial verlaufende Bohrungen vorgesehen zum Einbringen von Befestigungsschrauben, mit welchen das Ringsegment an einem Tragteil, insbesondere Trommel, Ring oder Ringsegment, befestigbar ist. Von Vorteil ist dabei, dass die Ringsegment mit nur wenig Verstrebungen oder anderweitigen materialbedürftigen Versteifungen ausführbar ist, weil die Formgebung für den Ring mittels der Trommel oder mittels des anderweitigen Tragteils bereit gestellt wird. Der Ring muss also nicht selbst seine Form halten.

Bei einer vorteilhaften Ausgestaltung ist das Ringsegment samt Verzahnung, Stirnflächen und schwertartig ausgebildetem Bereich einstückig ausgeformt. Von Vorteil ist dabei, dass eine stabile und haltesichere Befestigung in einfacher Weise ausführbar ist.

Bei einer vorteilhaften Ausgestaltung ist der Vorsprung an einem axial herausragenden Flächenbereich und/oder an einem Flächenbereich mit radial ausgerichteter Normale derart fein bearbeitet, dass Rundlaufbestimmung mittels Messtaster, insbesondere zur Bestimmung der Rundlaufabweichung, ermöglicht ist, insbesondere zur Verbesserung der Ausrichtung der Ringsegmente zueinander. Von Vorteil ist dabei, dass am gesamten Umfang des Zahnrades eine Abweichung vom Rundlauf feststellbar ist und somit die Ausrichtung der Segmente zueinander detektierbar und korrigierbar ist.

Erfindungsgemäß ist der Vorsprung auf kleinerem Radialabstand angeordnet als eine am Ringsegment vorgesehene Verzahnung, insbesondere auf kleinerem Radialabstand als der Fußkreis der Verzahnung.

Erfindungsgemäß ragt der Vorsprung axial herausragt aus dem ihn umgebenden Oberflächenbereich des Ringsegments, wobei die Verzahnung radial außen am Ringsegment angeordnet ist. Von Vorteil ist dabei, dass die Rundlaufabweichung beabstandet von der Verzahnung ausführbar ist.

Bei einer vorteilhaften Ausgestaltung ist das Ringsegment radial unterhalb der Verzahnung ein Verbindungsstegbereich schwertartig ausgebildet, so dass der Verbindungsbereich der Ringsegmente miteinander auf größerem Radialabstand vorgesehen ist als der Verbindungsbereich der Ringsegmente mit einem vom Zahnrad anzutreibenden Teil, wie Trommel oder Welle. Von Vorteil ist dabei, dass hohe Drehmomente und Kräfte innerhalb der verbundenen Ringsegmente erlaubt sind.

Bei einer vorteilhaften Ausgestaltung weisen das Ringsegment einen die Stirnflächen verbindenden Verbindungsstegbereich auf, in welchem Ausnehmungen zur Durchführung von das Ringsegment mit dem anzutreibenden Teil verbindenden Verbindungsschrauben angeordnet sind, so dass der Verbindungsbereich der Ringsegmente miteinander und der Verbindungsbereich der Ringsegmente mit dem vom Zahnrad anzutreibenden Teil, wie Trommel oder Welle, zumindest einen gemeinsamen Radialabstands-Teilbereich überdecken, insbesondere also im Wesentlichen radial auf gleichem Radialabstand angeordnet sind. Von Vorteil ist dabei, dass bei geringem Materialaufwand eine hohe Festigkeit erreichbar ist und hohe Drehmomente übertragbar, da diese auf gleichem Radialabstand übertragen werden.

Bei einer vorteilhaften Ausgestaltung weist der Verbindungsstegbereich zumindest eine Ausnehmung aufweist, insbesondere zumindest eine ovale Ausnehmung oder aus axialer Richtung gesehen eine asymmetrische und ein oder mehr symmetrische Ausnehmungen. Von Vorteil ist dabei, dass insbesondere bei einer ovalen Ausnehmung eine hohe Stabilität bei geringer Masse erreichbar ist.

Bei einer vorteilhaften Ausgestaltung weist der Verbindungsstegbereich in Umfangsrichtung hintereinander angeordnete, mehrere symmetrische Ausnehmungen auf, die mittels im Wesentlichen sich radial erstreckenden Zwischenstegen getrennt sind, wobei in den Zwischenstegen axial ausgerichtete Bohrungen zur Befestigung am anzutreibenden Teil vorgesehen sind. Von Vorteil ist dabei, dass jeder Zwischensteg nur einen geringen Anteil an Drehmoment übertragen muss und somit wenig Material und trotzdem insgesamt hohes Drehmoment übertragbar ist, wenn viele Zwischenstege und Ausnehmungen in jedem Segment vorgesehen sind.

Bei einer vorteilhaften Ausgestaltung ist das Ringsegment samt Verzahnung, Stirnflächen und schwertartig ausgebildetem Bereich, insbesondere Verbindungsstegbereich, einstückig ausgeformt. Von Vorteil ist dabei, dass mit wenig Materialaufwand eine stabiles tragfähiges Ringsegment erzeugbar ist.

Wichtige Merkmale bei dem Trommelantrieb sind, dass er eine Trommel und ein antreibendes Verzahnungsteil umfasst,
wobei am äußeren Umfang der Trommel Ringsegmente vorgesehen sind, wobei die Ringsegmente eine Verzahnung aufweisen,
wobei das antreibende Verzahnungsteil mit der Verzahnung im Eingriff steht und die Trommel zumindest teilweise über das Verzahnungsteil gelagert ist.

Wichtig ist dabei, dass das Gewicht der Trommel über das antreibende Verzahnungsteil abführbar ist. Die wird insbesondere ermöglicht durch die Verwendung von ADI als Material für die Verzahnung. Denn dadurch ist die Tragfähigkeit derart hoch, dass die gesamte Lagerung der Trommel ermöglicht ist.

Von Vorteil ist dabei, dass die Verzahnung von dem antreibenden Verzahnungsteil antreibbar ist. Insbesondere ist dieses Verzahnungsteil sehr viel kleiner ausführbar als die durch die zusammengesetzten Ringsegmente gebildete Verzahnung. Vorzugsweise ist der Außendurchmesser des antreibenden Verzahnungsteils mindestens fünfmal kleiner als der Außendurchmesser der durch die zusammengesetzten Ringsegmente gebildete Verzahnung. Auf diese Weise ist eine Trommel oder ein entsprechend zylindrisches Objekt in einfacher Weise antreibbar. Der besondere Vorteil in der Verwendung der Ringsegmente liegt auch darin, dass die zur Fertigung der Verzahnung eingesetzte Werkzeugmaschine entsprechend klein wählbar ist, insbesondere ist die Werkzeugmaschine kleiner als die durch die zusammengesetzten Ringsegmente gebildete Verzahnung. Mittels Verbindung mit der Trommel ist also als tragendes und formgebendes Teil die Trommel verwendbar. Daher müssen die Ringsegmente auch nur mit geringer Wandstärke und geringer Anzahl von Versteifungen und Verstrebungen ausgeführt werden. Es sind sogar gewichtseinsparende Ausnehmungen vorsehbar.

Dabei ist die Formgebung allerdings von der Trommel abhängig und es sind dortige große Temperaturschwankungen zu vermeiden, da durch die starre Verbindung der Ringsegmente mit der Trommel die Formveränderung sich auch auf die durch die zusammengesetzten Ringsegmente gebildete Verzahnung auswirkt.

Bei einer vorteilhaften Ausgestaltung ist das antreibende Verzahnungsteil im Eingriff mit der durch die Verzahnung der Ringsegmente gebildeten zusammengesetzten Verzahnung. Von Vorteil ist dabei, dass eine Drehbewegung eines großen schweren Teils ermöglicht ist, ohne dass dies eine umlaufende unterbrechungsfreie einstückig gefertigte Verzahnung aufweist.

Bei einer vorteilhaften Ausgestaltung sind am äußeren Umfang der Trommel zumindest ein erster Ring oder zumindest in Umfangsrichtung zusammengesetzte, einen ersten Ring bildende Ringsegmente vorgesehen, insbesondere schweißverbunden mit der Trommel. Von Vorteil ist dabei, dass Spannungen und Schwingungen in Umfangsrichtung etwas abgedämpft werden.

Bei einer vorteilhaften Ausgestaltung sind weitere Ringsegmente vorgesehen, die in Umfangsrichtung zu einem weiteren Ring zusammengesetzt sind und mit dem ersten Ring oder den entsprechenden Ringsegmenten verbunden sind, insbesondere schweißverbunden. Von Vorteil ist dabei, dass auch zur starren Befestigung der durch die zusammengesetzten Ringsegmente gebildete Verzahnung. An der Trommel vorgesehene Teile aus Segmenten herstellbar sind.

Bei einer vorteilhaften Ausgestaltung sind die eine Verzahnung aufweisenden Ringsegmente mit den ersten und/oder weiteren Ringsegmenten verbunden, insbesondere kraftschlüssig verbunden, insbesondere schraubverbunden. Von Vorteil ist dabei, dass die verzahnten Teile an Ringsegmenten befestigbar sind, die radial an der Trommeloberfläche herausragen und somit für axial gerichtete Befestigungsschrauben eine wenig aufwändige Befestigungsmöglichkeit darstellen. Dabei sind die Ringsegmente vorzugsweise verschweißt mit der Trommeloberfläche.

Bei einer vorteilhaften Ausgestaltung sind Bohrungen in verbindbaren Ringsegmenten vorgesehen, in welchen Bolzen eingebracht sind zum Ausrichten der Ringsegmente zueinander. Von Vorteil ist dabei, dass ein Ausrichten in einfacher Weise ermöglicht ist. Vorzugsweise sind die Bolzen in den Bohrungen derart vorgesehen, dass ein kleiner Toleranzbereich an relativer Bewegung der Ringsegmente zueinander zur Verfügung steht. Somit ist ein Fein-Ausrichtung ermöglicht, beispielsweise mittels Klopfen und nachfolgendem Festziehen der Befestigungsschrauben oder dergleichen.

Bei einer vorteilhaften Ausgestaltung ist im schwertartigen Bereich zumindest eine Ausnehmung vorgesehen zur Reduktion der Masse des Ringsegments, insbesondere wobei die Ausnehmung in Umfangsrichtung von der Umfangsposition der Befestigungsbereiche, insbesondere entsprechender Bohrlöcher, beabstandet ist. Von Vorteil ist dabei, dass axial gerichtete Ausnehmungen vorsehbar sind.

Bei einer vorteilhaften Ausgestaltung sind weitere Ringsegmente vorgesehen, die in Umfangsrichtung zu einem weiteren Ring zusammengesetzt sind und mit dem ersten Ring oder den entsprechenden Ringsegmenten verbunden sind, insbesondere schweißverbunden. Bei einer vorteilhaften Ausgestaltung sind Bohrungen in verbindbaren Ringsegmenten vorgesehen, in welche ein Bolzen eingebracht ist zum Ausrichten der Ringsegmente zueinander.

Bei einer vorteilhaften Ausgestaltung im schwertartigen Bereich zumindest eine Ausnehmung vorgesehen ist zur Reduktion der Masse des Ringsegments, insbesondere wobei die Ausnehmung in Umfangsrichtung von der Umfangsposition der Befestigungsbereiche, insbesondere entsprechender Bohrlöcher, beabstandet ist.

Weitere Vorteile ergeben sich aus den Unteransprüchen.

Die Erfindung wird nun anhand von Abbildungen näher erläutert:
In der Figur 1 ist eine erfindungsgemäße Anordnung mit mehreren Ringsegmenten 1 gezeigt.
In der Figur 2 ist ein Ringsegment 1 in Schrägansicht gezeigt.
In der Figur 3 ist ein ähnlich aufgebautes Ringsegment 1 in Seitenansicht gezeigt.
In der Figur 4 ist eine zugehörige Schnittansicht gezeigt.
In der Figur 5 ist ein schematischer Schnitt durch die Anordnung, umfassend der Befestigungsmittel auf einer Trommel gezeigt.
In der Figur 6 ist eine alternative Ausführung dargestellt.
In der Figur 7 ist ein weiteres aus sechszehn Ringsegmenten 1 zusammengesetztes Groß-Zahnrad gezeigt, wobei jedes Ringsegment 14 Zähne aufweist.
In der Figur 8 ist die Verbindung zweier Ringsegmente der Figur 7 näher dargestellt.

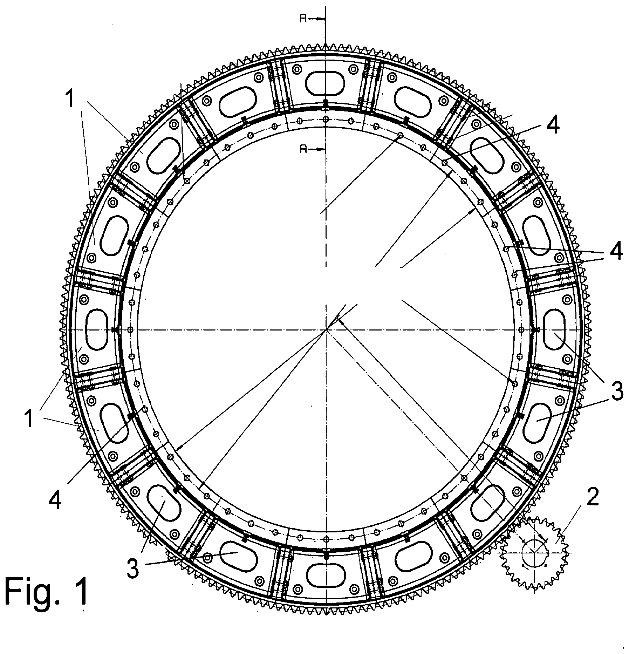

In der Figur 1 sind die miteinander verbundenen außen-verzahnten Ringsegmente 1 gezeigt, welche zusammen an einer anzutreibenden Trommel befestigt sind. Die Ringsegmente 1 bilden zusammen ein Zahnrad, also Groß-Zahnrad, das von einem kleineren Zahnrad 2 angetrieben wird. Dieses Zahnrad 2 ist auf einer Abtriebswelle eines nicht gezeigten Getriebes formschlüssig verbunden. Somit ist einer an der eintreibenden Seite des Getriebes angeordneter, leistungsarmer Elektromotor in der Lage, das Groß-Zahnrad anzutreiben.

Die Ringsegmente sind hierbei mittels Schrauben mit ihrem jeweiligen in Umfangsrichtung nächst benachbarten Ringsegment verbunden und an Ringsegmenten befestigt, die wiederum an der Trommel befestigt sind. Zur Verbindung jeweils zweier in Umfangsrichtung benachbarter Ringsegmente 1 werden zwei Passschrauben vorgesehen, wobei diese der Ausrichtung zueinander dienen, und vier Befestigungsschrauben, mit denen die jeweils zu verbindenden Ringsegmente in Umfangsrichtung aufeinander gedrückt werden.

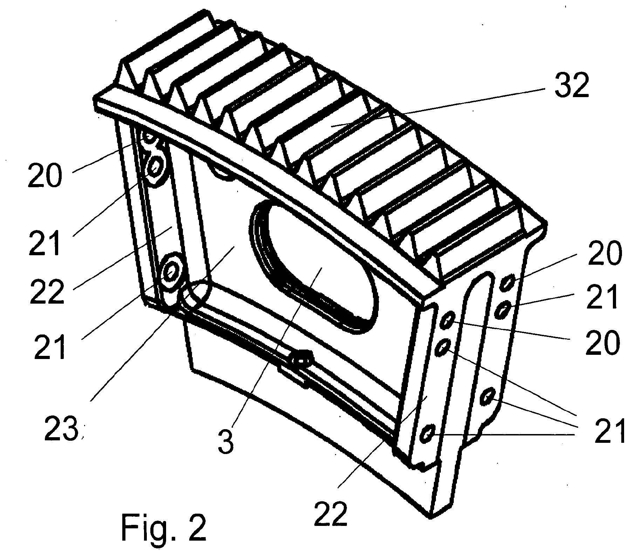

In Figur 2 ist ein Ringsegment 1 näher dargestellt.

An beiden in Umfangsrichtung vorgesehenen Endbereichen weist das Ringsegment Haltebereiche 22 auf, die mit Bohrlöchern versehen werden, in welche die Passschrauben 20 beziehungsweise die radial tiefer angeordneten Verbindungsschrauben 21 einführbar sind. Die beiden Haltebereiche sind mittels eines Verbindungsstegbereichs 23 verbunden.

Jedes Ringsegment 1 weist eine ovale Ausnehmung 3 im Verbindungsstegbereich 23 auf, die ohne wesentliche Beeinflussung der Festigkeit und Stabilität des Ringsegments 1 eine Massenverminderung bewirkbar macht. Hierzu ist die ovale Ausnehmung jedes Ringsegments 1 in Umfangsrichtung länger ausgeführt als in radialer Richtung.

Radial außen, angrenzend an die Haltebereiche 22 und den Verbindungsstegbereich 23 ist der Verzahnungsbereich mit der Verzahnung 32 angeordnet. Vorzugsweise ist das Ringsegment einstückig aus ADI hergestellt.

Der Verbindungsstegbereich 23 ragt nach radial innen schwertartig heraus. Mittels diesem herausragenden Bereich ist eine Verbindung mit der anzutreibenden Trommel ermöglicht. Vorzugsweise werden hierzu in Figur 2 nicht gezeigten Verbindungsschrauben 4 und entsprechende Bohrungen in axialer Richtung in dem herausragenden Bereich und in der Trommel vorgesehen.

Die Verbindung mit der Trommel ist mittels der axial ausgerichteten Verbindungsschrauben 4 unterhalb desjenigen Radialabstandes ausgeführt, der für das Verbinden der Ringsegmente 1 miteinander verwendet ist.

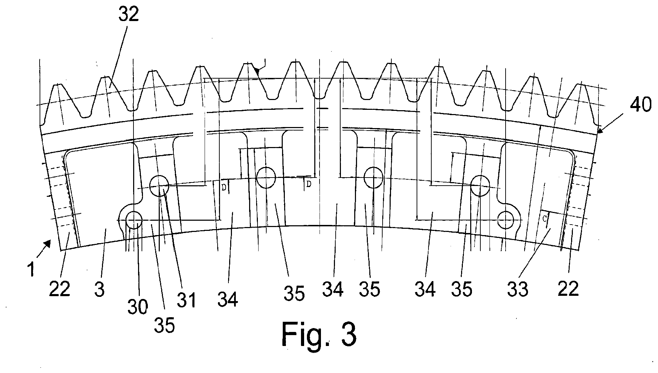

In der Figur 3 ist ein weiteres ähnliches Ringsegment 1 vergrößert dargestellt, wobei am äußeren Rand die Verzahnung 32 angeordnet ist. Darüber hinaus sind Bohrungen 30 zum Ausrichten und Bohrungen 31 zum Befestigen gezeigt. Durch die Verwendung von ADI als Werkstoff ist der Vorspannkraftverlust durch Setzen der Schrauben geringer und damit die Verbindung sicherer gewährleistbar. Denn es sind nun höhere Kräfte möglich. Insbesondere ist dabei von vorteilhaftem Effekt, dass ADI im Vergleich zu sonstigem gehärtetem Stahl elastischer und härter ist.

Im Unterschied zur Ausführung nach Figur 2 weist das Ringsegment 1 nun mehrere Ausnehmungen (33, 34) auf, die in Umfangsrichtung nacheinander angeordnet sind. In Umfangsrichtung vorne und hinten ist jeweils eine asymmetrische Ausnehmung 33 und in Umfangsrichtung dazwischen sind symmetrische Ausnehmungen 34 angeordnet. Somit sind Bohrungen zum Ausrichten 30 ohne wesentliche Beeinflussung der Stabilität vorsehbar.

Der Verbindungsstegbereich 35 ist nicht vollständig dargestellt. Die axial verlaufenden, in den Verbindungsstegbereich 35 eingebrachten Bohrungen 31 sind für axial angeordnete Verbindungsschrauben zur Verbindung mit der Trommel vorgesehen.

Somit ist die Verbindung mit der Trommel auf etwa dem selben Radialabstand ermöglicht wie das Verbinden der Ringsegmente 1 miteinander.

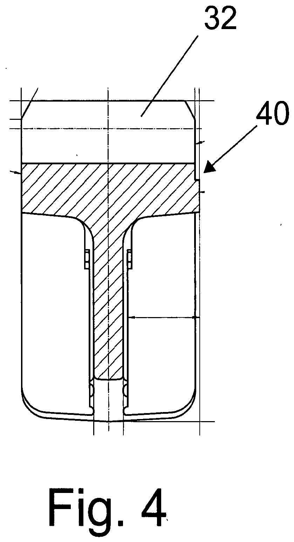

Wie in Figur 4 gezeigt, weisen die Ringsegmente 1 einen in Umfangsrichtung verlaufenden Absatz 40 auf, so dass nach dem Zusammensetzen der Ringsegmente 1 am Umfang des so gebildeten großen Zahnrades ein in Umfangsrichtung verlaufender Absatz gebildet ist, an welchem ein Messmittel, beispielsweise ein Messtaster anordenbar ist, welcher bei Drehung des Zahnrades nur ausgelenkt wird von fertigungsbedingten Abweichungen von der Kreisform oder von Abweichungen, die durch fehlerhaftes Ausrichten der Ringsegmente 1 erzeugt sind. Hierzu sind Flächen, die an den Absatz angrenzen, geschliffen oder anderweitig fein bearbeitet sind, vorgesehen. Insbesondere ist also eine an den Absatz angrenzende fein bearbeitete Ringfläche vorgesehen, an der der Messtaster die Abweichungen in radialer Richtung, und eine weitere an den Absatz angrenzende fein bearbeitete Ringfläche vorgesehen, an der der Messtaster die Abweichungen in axialer Richtung feststellbar macht.

Somit ist nach Lockern der die Ringsegmente 1 verbindenden Befestigungsschrauben ein Ausrichten, beispielsweise durch mittels Klopfen bewirktem Verschieben, ermöglicht. Nach dem Ausrichten werden die Befestigungsschrauben wieder angezogen. Die grundlegende Ausrichtung der Ringsegmente zueinander ist jedoch durch die in den Bohrungen 20 angeordneten Passschrauben erreicht.

ADI ist zwar ein sehr hartes Material im Vergleich zu Stahl, weist aber auch eine Elastizität auf.

Da nicht nur der Verzahnungsbereich sondern die gesamten Ringsegmente aus ADI gefertigt sind, ist mittels der in den Bohrungen 21 angeordneten Befestigungsschrauben eine kleine elastische Verformung des Haltebereichs des Ringsegments erreichbar und somit der Abstand der Mittelpunkte der Ringsegmente zueinander veränderbar. Somit gelingt ein Ausgleich oder zumindest eine Reduzierung von fehlerhaften Toleranzen, indem die Befestigungsschrauben weiter angezogen werden. Somit sind sogar Abweichungen von einigen µm bis zu 10 µm ausgleichbar.

Die Fertigung der Verzahnung 32 der Ringsegmente wird relativ zur Stirnfläche der Ringsegmente möglichst exakt ausgeführt. Auf diese Weise ist durch Ausrichten und Verbinden der Ringsegmente ein Zahnrad herstellbar, dessen Verzahnung möglichst geringe Abweichungen von einer idealen Verzahnung im Verbindungsbereich der Ringsegmente aufweist.

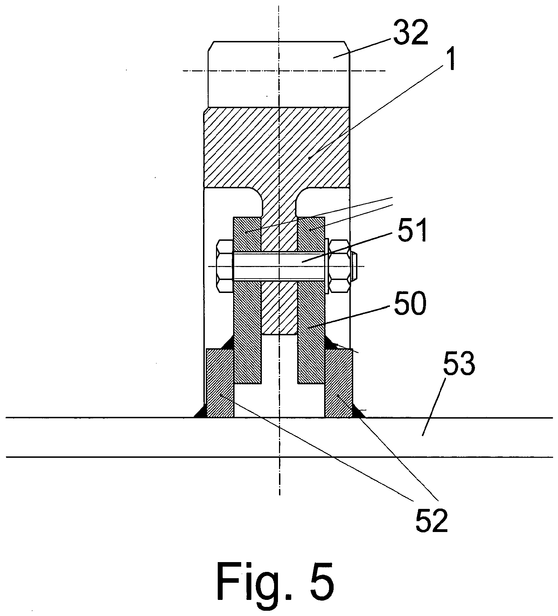

In Figur 5 ist eine beispielhafte Befestigungsmöglichkeit für die Ringsegmente 1 an der Trommel gezeigt. Hierbei sind am äußeren Umfang der Trommel 53 zwei parallel zueinander ausgerichtete Ringsegmente 52 angeschweißt, an welchen wiederum zwei weitere, parallel zueinander ausgerichtete Ringsegmente 50 angeschweißt vorgesehen sind. Mittels durch in dem Ringsegment 50 vorgesehenen Bohrlöchern geführten Befestigungsschrauben 51 wird das Ringsegment 50 angeschraubt, wobei am dem Schraubenkopf der Befestigungsschrauben gegenüber liegenden axialen Endbereich der Schraube eine Mutter vorgesehen ist.

Dabei sind die Ringsegmente 50 enger voneinander beabstandet als die Ringsegmente 52 und auf einem größeren Radialabstand vorgesehen als die Ringsegmente 52. Auf diese Weise ist die Auslenkbarkeit der Ringsegmente 50 in axialer Richtung der Ringsegmente beim Befestigen des Ringsegments 1 verbessert.

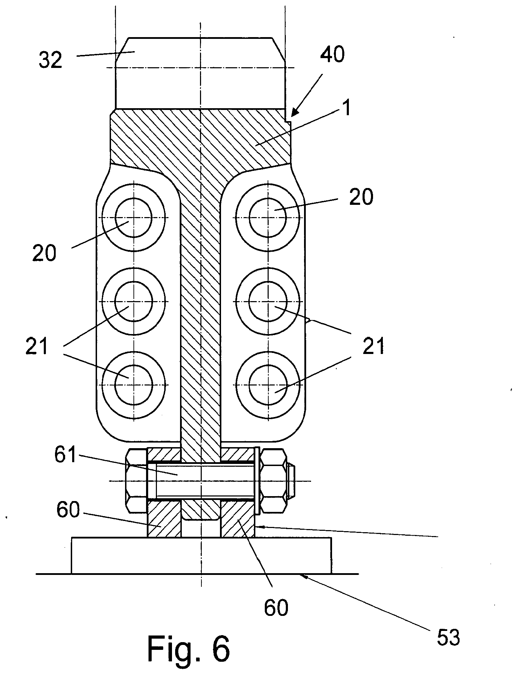

In der Figur 6 ist ein alternatives Ausführungsbeispiel gezeigt. Dabei ist wiederum am äußeren Umfang der Trommel 53 ein parallel zueinander ausgerichtetes Paar von Ringsegmenten 60 mit der Trommel 53 schweißverbunden vorgesehen. Mittels Befestigungsschrauben 61 ist das Ringsegment 1 schraubverbunden.

Zwei in Umfangsrichtung zueinander benachbarte Ringsegmente 1 werden an der in Figur 6 sichtbaren Stirnseite an den Bohrungen (20, 21) verbunden. Hierzu sind die Bohrungen 20 für Passschrauben vorgesehen und die Bohrungen 21 für Befestigungsschrauben. Dabei füllen die Passschrauben die Bohrungen 20 ganz aus, so dass die relative Ausrichtung der Ringsegmente 1 zueinander durch aufeinander Ausrichten der Bohrungen 20 mit in sie eingeführten Passschrauben ausgeführt wird. Die vier Befestigungsschrauben füllen die Bohrungen 21 nicht ganz aus, wodurch also in diesen Bohrungen ein Spiel vorliegt. Durch die Verwendung von ADI ist eine starke anziehende Kraft durch die Befestigungsschrauben erlaubt. Der Vorspannkraftverlust durch Setzen der Schrauben ist verringert und somit eine sichere stabile Verbindung erreichbar. Insbesondere ist aber auch ein Beeinflussen des Abstandes der Schwerpunkte der Ringsegmente 1 zueinander ausführbar, insbesondere bis zu einigen µm oder sogar einigen 10µm.

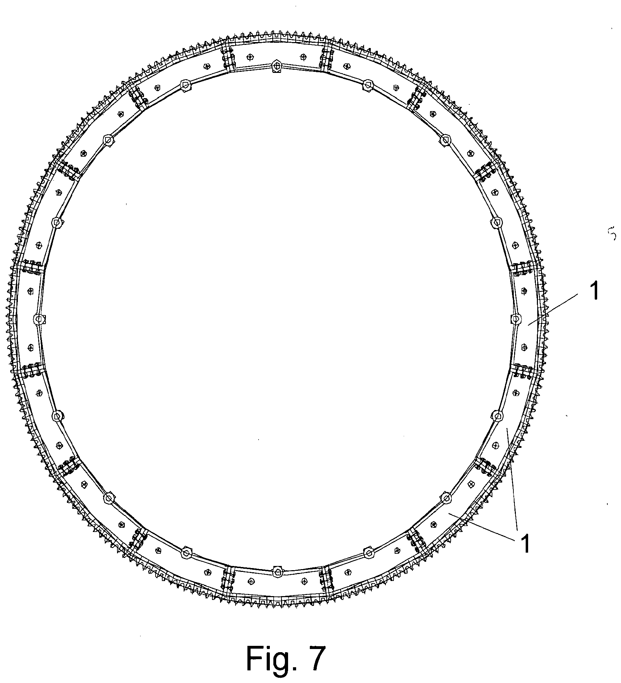

Zielsetzung der Ausführung nach Figur 7 ist die Bereitstellung eines neuartigen segmentierten Großzahnrads, das leicht herzustellen und dessen Qualität in höherem Masse kontrolliert werden kann.

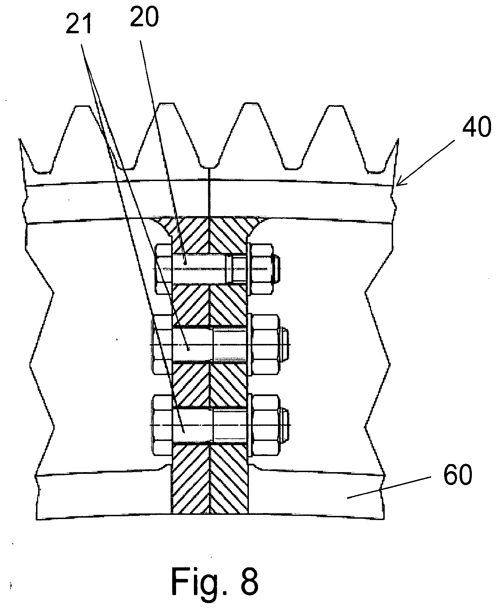

Das neue segmentierte Großzahnrad besteht aus 7 bis 25 Segmente, wobei die benachbarten Segmente durch Schrauben miteinander verbunden werden. In der Figur 7 ist hierzu ein Beispiel mit 16 Segmenten gezeigt, wobei jedes Segment 14 Zähne aufweist. In Figur 8 ist der Verbindungsbereich zweier Segmente näher dargestellt. Dabei weisen die Segmente an ihren in Umfangsrichtung angeordneten beiden Endbereichen jeweils radial orientierte Stirnflächen auf, die Bohrlöcher zur Aufnahme der Schrauben der Schraubverbindung aufweisen, insbesondere wobei die Bohrlöcher tangential orientiert sind. Dabei ist in den auf größerem Radialabstand vorgesehenen Bohrlöchern 20 jeweils eine Passschraube zum Ausrichten und in den weiter innen liegenden Bohrlöchern 21 jeweils eine Befestigungsschraube vorgesehen. Die Schrauben sind also tangential ausgerichtet.

Bei der Erfindung bestehen folgende Vorteile:
1. Einfache Gussarbeit: da jedes einzelne Segment sehr klein ist, kann die Qualität der Gussteile besser kontrolliert werden. Abkühlungsrisse sind vermeidbar.
2. Keine spezielle Bearbeitungsanlage erforderlich: Da die einzelnen Segmente relativ klein sind, können sie in der Regel mit bereits vorhandenen Anlagen bearbeitet werden. Der Hersteller muss dafür keine weitere spezielle Anlage anschaffen, sodass die Produktionskosten gesenkt werden können.
3. Bequemer Transport: Sowohl in der Fabrik als auch am Einsatzort dieses Zahnrads können die Segmente, einzeln wie im Verbund, einfach bewegt werden. Für ihren Transport ist kein Spezialfahrzeug erforderlich. Ein segmentiertes Großzahnrad lässt sich durchaus in einem Standard-Container transportieren.
4. Besser kontrollierbare Qualität: Da die einzelnen Segmente sehr klein sind, kann eventueller Ausschuss ohne großen Kostenaufwand sofort entfernt werden. Das Großzahnrad wird zudem nur aus denjenigen Segmenten zusammengesetzt, die frei von Abkühlungsrissen und anderen Defekten sind.
5. Vereinfachter Segmentwechsel: Wenn ein einzelnes Segment aus unerwartetem Grund defekt ist, kann es problemlos aus dem Großzahnrad herausgenommen und umgehend durch ein neues Segment ersetzt werden, so dass die betroffene Anlage schnellstens wieder in Betrieb genommen werden kann.
6. Kurze Lieferzeit: Die Großzahnräder werden zunächst als Einzelsegmente produziert und dann zu einem Großzahnradmodul zusammengebaut. Dies beschleunigt das Produktionsverfahren und garantiert eine kurzfristige und zuverlässige Lieferung der Produkte.

ADI-Gusswerkstoffe (Austempered Ductile Iron) haben als Basis Gusseisen mit Kugelgraphit. Durch eine mehrstufige Wärmebehandlung wird der Werkstoff ADI erzeugt.

Bei weiteren erfindungsgemäßen Ausführungsbeispielen sind die Ringsegmente wärmebehandelt

Bei weiteren erfindungsgemäßen Ausführungsbeispielen wird die Trommel mit ihrem Großzahnrad an zwei antreibenden Zahnrädern gelagert, deren Mittelachsen parallel zur Trommelachse orientiert sind und eine Ebene aufspannen, die unterhalb der Trommel angeordnet ist. Die beiden antreibenden Zahnräder sind hierbei an einer ersten axialen Position angeordnet. Wenn dieselbe Anordnung, umfassend an der Trommel ebenfalls befestigtes Zahnrad und zwei entsprechende Zahnräder, an einer anderen axialen Position angeordnet werden, ist sogar eine gänzliche Lagerung der gesamten Trommel ermöglicht. Die an der Trommel befestigten Zahnräder sind dabei nach den Ausführungsbeispielen der Figuren ausgeführt.

### Bezugszeichenliste

- 1: Ringsegment
- 2: Zahnrad
- 3: ovale Ausnehmung
- 20: Bohrungen für Passschrauben
- 21: Bohrungen für Befestigungsschrauben
- 22: Haltebereich
- 23: Verbindungsstegbereich
- 30: Bohrung zum Ausrichten
- 31: Bohrung
- 32: Verzahnung
- 33: asymmetrische Ausnehmung
- 34: symmetrische Ausnehmung
- 35: Zwischenstege des Verbindungsstegbereichs

- 40: Absatz
- 50: Ringsegment
- 51: Befestigungsschraube
- 52: Ringsegment
- 53: Trommel
- 60: Ringsegment
- 61: Befestigungsschraube

## Patentansprüche

1. Antriebsanordnung mit einem anzutreibenden Teil und mit einem aus verzahnten Segmenten, also Ringsegmenten (1), zusammengesetzten antreibenden Zahnrad (2), dessen am Außenumfang angeordnete Verzahnung (32) aus den Verzahnungen der Segmente gebildet und zusammengesetzt ist,
wobei die Verzahnung (32) radial außen am Ringsegment (1) angeordnet ist,
wobei die Verzahnung (32) eine Evolventenverzahnung ist,
wobei die Verzahnung (32) aus ADI Guss gefertigt ist,
wobei die in Umfangsrichtung benachbarten Segmente jeweils schraubverbunden sind,
wobei die Segmente an ihren in Umfangsrichtung vorgesehenen beiden Endbereichen, also Haltebereichen (22), jeweils radial orientierte Stirnflächen aufweisen, die Bohrlöcher zur Aufnahme der Schrauben der Schraubverbindung aufweisen,
wobei die Bohrlöcher tangential orientiert sind,
wobei die Endbereiche mittels eines Verbindungsstegbereichs (23) verbunden sind,
wobei das anzutreibende Teil einen kleineren Außendurchmesser aufweist als das antreibende Zahnrad,
wobei die Segmente Ringsegmente (1) sind,
wobei die Schraubverbindung jeweils mindestens zwei Passschrauben, die der Ausrichtung der Ringsegmente (1) zueinander dienen, und mindestens zwei Befestigungsschrauben (51) umfasst,
**dadurch gekennzeichnet, dass**
das Ringsegment (1) einen in Umfangsrichtung verlaufenden Vorsprung, also Absatz (40), aufweist, so dass nach dem Zusammensetzen der Ringsegmente (1) am Umfang des so gebildeten Zahnrades ein in Umfangsrichtung verlaufenden Absatz (40) gebildet ist,
wobei der Vorsprung auf kleinerem Radialabstand angeordnet ist als eine am Ringsegment (1) vorgesehene Verzahnung (32),
wobei der Vorsprung axial herausragt aus dem ihn umgebenden Oberflächenbereich des Ringsegments,
- wobei das Zahnrad (2) aus N Segmenten zusammengesetzt ist, wobei die Anzahl N zwischen 7 und 25 beträgt,
- und wobei die Verzahnung (32) des Zahnrades (2) ein Modul m aufweist und jedes Segment z Zähne aufweist, wobei das Produkt z x m einen Wert aus dem Bereich zwischen 340 mm und 440 mm aufweist.

2. Antriebsanordnung nach Anspruch 1,
**dadurch gekennzeichnet, dass**
das anzutreibende Teil eine Trommel (53) oder eine Welle ist.

3. Antriebsanordnung nach mindestens einem der vorangegangenen Ansprüche,
**dadurch gekennzeichnet, dass**
die Schraubverbindung jeweils mindestens drei oder vier Befestigungsschrauben (51) umfasst.

4. Antriebsanordnung nach mindestens einem der vorangegangenen Ansprüche,
**dadurch gekennzeichnet, dass**
die Befestigungsschrauben (51) Bolzenschrauben sind.

5. Antriebsanordnung nach mindestens einem der vorangegangenen Ansprüche,
**dadurch gekennzeichnet, dass**
der Vorsprung auf kleinerem Radialabstand angeordnet ist als der Fußkreis der Verzahnung (32).

6. Antriebsanordnung nach mindestens einem der vorangegangenen Ansprüche,
**dadurch gekennzeichnet, dass**
das Modul zwischen 10 und 100 mm beträgt.

7. Antriebsanordnung nach mindestens einem der vorangegangenen Ansprüche,
**dadurch gekennzeichnet, dass**
das Zahnrad (2) ein Modul aufweist, wobei
- bei einem Modul von 20 mm jedes Ringsegment (1) zwischen 17 und 22 Zähne aufweist,
- bei einem Modul von 25 mm jedes Ringsegment (1) zwischen 13 und 17 Zähne aufweist,
- bei einem Modul von 30 mm jedes Ringsegment (1) zwischen 11 und 14 Zähne aufweist,
- bei einem Modul von 40 mm jedes Ringsegment (1) zwischen 8 und 10 Zähne aufweist.

8. Antriebsanordnung nach einem der Ansprüche 1 bis 5,
**dadurch gekennzeichnet, dass**
der Vorsprung an einem axial herausragenden Flächenbereich und/oder an einem Flächenbereich mit radial ausgerichteter Normale derart fein bearbeitet ist, dass Rundlaufbestimmung mittels Messtaster ermöglicht ist, zur Verbesserung der Ausrichtung der Ringsegmente (1) zueinander.

9. Antriebsanordnung nach Anspruch 8,
**dadurch gekennzeichnet, dass**
der Messtaster einen Messtaster zur Bestimmung der Rundlaufabweichung ist.

10. Antriebsanordnung nach einem der Ansprüche 1 bis 5,
**dadurch gekennzeichnet, dass**
das Ringsegment (1) an seinen in Umfangsrichtung liegenden Endbereichen Stirnflächen mit tangential, also in Umfangsrichtung, verlaufenden Bohrlöchern aufweist, in die Befestigungsschrauben (51) einbringbar sind zur Verbindung mit jeweils einem weiteren gleichartigen Ringsegment (1).

11. Antriebsanordnung nach einem der Ansprüche 1 bis 5,
**dadurch gekennzeichnet, dass**
am Ringsegment (1) radial unterhalb der Verzahnung (32) ein Verbindungsstegbereich schwertartig ausgebildet ist, so dass der Verbindungsbereich der Ringsegmente (1) miteinander auf größerem Radialabstand vorgesehen ist als der Verbindungsbereich der Ringsegmente (1) mit dem vom Zahnrad (2) anzutreibenden Teil
oder dass
das Ringsegment (1) einen die Stirnflächen verbindenden Verbindungsstegbereich aufweisen, in welchem Ausnehmungen (3) zur Durchführung von das Ringsegment (1) mit dem anzutreibenden Teil verbindenden Verbindungsschrauben angeordnet sind, so dass der Verbindungsbereich der Ringsegmente (1) miteinander und der Verbindungsbereich der Ringsegmente (1) mit dem vom Zahnrad (2) anzutreibenden Teil zumindest einen gemeinsamen Radialabstands-Teilbereich überdecken, also im Wesentlichen radial auf gleichem Radialabstand angeordnet sind.

12. Antriebsanordnung nach Anspruch 11,
**dadurch gekennzeichnet, dass**
im Verbindungsstegbereich axial verlaufende Bohrungen (20) vorgesehen sind zum Einbringen von Befestigungsschrauben (51), mit welchen das Ringsegment (1) an einem Tragteil befestigbar ist,
und/oder dass
der Verbindungsstegbereich zumindest eine ovale Ausnehmung (3) oder aus axialer Richtung gesehen eine asymmetrische und ein oder mehr symmetrische Ausnehmungen (34) aufweist,
und/oder dass
der Verbindungsstegbereich in Umfangsrichtung hintereinander angeordnete, mehrere symmetrische Ausnehmungen (34) aufweist, die mittels im Wesentlichen sich radial erstreckenden Zwischenstegen (35) getrennt sind, wobei in den Zwischenstegen (35) axial ausgerichtete Bohrungen (20) zur Befestigung am anzutreibenden Teil vorgesehen sind.

13. Antriebsanordnung nach Anspruch 12,
**dadurch gekennzeichnet, dass**
das Tragteil eine Trommel (53), einen Ring oder ein Ringsegment (1) ist.

14. Antriebsanordnung nach Anspruch 11,
**dadurch gekennzeichnet, dass**
das Ringsegment (1) samt Verzahnung (32), Stirnflächen und schwertartig ausgebildetem Bereich, d.h. Verbindungsstegbereich, einstückig ausgeformt ist.

15. Trommelantrieb, umfassend eine Trommel (53) und ein antreibendes Verzahnungsteil (2),
wobei am äußeren Umfang der Trommel (53) Ringsegmente (1) vorgesehen sind, die jeweils an der Trommel (53) befestigt sind,
wobei die Ringsegmente (1) eine Verzahnung (32) eines Zahnrades (1) bilden,
wobei das antreibende Verzahnungsteil (2) mit der Verzahnung (32) im Eingriff steht und die Trommel (53) zumindest teilweise über das Verzahnungsteil gelagert ist,
**dadurch gekennzeichnet, dass**
die Ringsegmente (1) eine Antriebsanordnung nach einem der Ansprüche 1 bis 1**4** ausbilden.

16. Trommelantrieb nach Anspruch 15,
**dadurch gekennzeichnet, dass**
das antreibende Verzahnungsteil im Eingriff ist mit der durch die Verzahnung (32) der Ringsegmente (1) gebildeten zusammengesetzten Verzahnung (32).

17. Trommelantrieb nach Anspruch 15,
**dadurch gekennzeichnet, dass**
am äußeren Umfang der Trommel (53) zumindest ein erster Ring oder zumindest in Umfangsrichtung zusammengesetzte, einen ersten Ring bildende Ringsegmente (52) vorgesehen sind.
und dass
weitere Ringsegmente (50) vorgesehen sind, die in Umfangsrichtung zu einem weiteren Ring zusammengesetzt sind und mit dem ersten Ring oder den entsprechenden Ringsegmenten (52) verbunden sind.
und dass
die eine Verzahnung (32) aufweisenden Ringsegmente (1) mit den weiteren Ringsegmenten (50) verbunden sind.

18. Trommelantrieb nach Anspruch 17,
**dadurch gekennzeichnet, dass**
der erste Ring oder die den ersten Ring bildenden Ringsegmente (52) mit der Trommel (53) schweißverbunden sind.

19. Trommelantrieb nach Anspruch 17,
**dadurch gekennzeichnet, dass**
die weiteren Ringsegmente (50) mit dem ersten Ring oder den entsprechenden Ringsegmenten (52) schweißverbunden sind.

20. Trommelantrieb nach Anspruch 17,
**dadurch gekennzeichnet, dass**
die eine Verzahnung (32) aufweisenden Ringsegmente (1) mit den weiteren Ringsegmenten (50) kraftschlüssig verbunden sind.

21. Trommelantrieb nach Anspruch 20,
**dadurch gekennzeichnet, dass**
die eine Verzahnung (32) aufweisenden Ringsegmente (1) mit den weiteren Ringsegmenten (50) schraubverbunden sind.

22. Trommelantrieb nach Anspruch 16 oder 15,
**dadurch gekennzeichnet, dass**
Bohrungen (20) in verbindbaren Ringsegmenten (1) vorgesehen sind, in welche ein Bolzen eingebracht ist zum Ausrichten der Ringsegmente zueinander.

23. Trommelantrieb nach Anspruch 16 oder 15,
**dadurch gekennzeichnet, dass**
das Ringsegment (1) unterhalb der Verzahnung (32) schwertartig ausgebildet ist, im schwertartigen Bereich zumindest eine Ausnehmung (3) vorgesehen ist zur Reduktion der Masse des Ringsegments.

24. Trommelantrieb nach Anspruch 23,
**dadurch gekennzeichnet, dass**
die Ausnehmung (3) in Umfangsrichtung von der Umfangsposition der Befestigungsbereiche beabstandet ist.

25. Trommelantrieb nach Anspruch 24,
**dadurch gekennzeichnet, dass**
die Ausnehmung (3) in Umfangsrichtung von der Umfangsposition der entsprechender Bohrlöcher beabstandet ist.

## Claims

1. A drive arrangement with a part which is to be driven and with a driving gear wheel (2) composed of toothed segments, i.e. ring segments (1), the toothing (32) of which which is arranged on the outer periphery is formed and composed of the sets of toothing of the segments,
wherein the toothing (32) is arranged radially externally on the ring segment (1),
wherein the toothing (32) is involute toothing,
wherein the toothing (32) is manufactured from ADI cast iron,
wherein the segments which are adjacent in the peripheral direction are connected by screwing in each case,
wherein the segments at their two end regions provided in the peripheral direction, i.e. holding regions (22), in each case have radially oriented end faces which have drill holes for receiving the screws of the screw connection,
wherein the drill holes are oriented tangentially,
wherein the end regions are connected by means of a connecting-web region (23),
wherein the part which is to be driven has a smaller external diameter than the driving gear wheel,
wherein the segments are ring segments (1),
wherein the screw connection comprises in each case at least two locating bolts which serve to align the ring segments (1) relative to each other, and at least two fastening bolts (51),
**characterised in that**
the ring segment (1) has a projection running in the peripheral direction, i.e. shoulder (40), so that once the ring segments (1) have been assembled a shoulder (40) running in the peripheral direction is formed on the periphery of the gear wheel thus formed,
wherein the projection is arranged at a shorter radial distance than toothing (32) provided on the ring segment (1),
wherein the projection protrudes axially out of the surface region of the ring segment surrounding it,
- wherein the gear wheel (2) is composed of N segments, the number N being between 7 and 25,
- and wherein the toothing (32) of the gear wheel (2) has a modulus m, and each segment has z teeth, the product of z x m having a value in the range between 340 mm and 440 mm.

2. A drive arrangement according to Claim 1,
**characterised in that**
the part which is to be driven is a drum (53) or a shaft.

3. A drive arrangement according to at least one of the preceding claims,
**characterised in that**
the screw connection in each case comprises at least three or four fastening bolts (51).

4. A drive arrangement according to at least one of the preceding claims,
**characterised in that**
the fastening bolts (51) are screw bolts.

5. A drive arrangement according to at least one of the preceding claims,
**characterised in that**
the projection is arranged at a smaller radial distance than the root circle of the toothing (32).

6. A drive arrangement according to at least one of the preceding claims,
**characterised in that**
the modulus is between 10 and 100 mm.

7. A drive arrangement according to at least one of the preceding claims,
**characterised in that**
the gear wheel (2) has a modulus, wherein
- for a modulus of 20 mm, each ring segment (1) has between 17 and 22 teeth,
- for a modulus of 25 mm, each ring segment (1) has between 13 and 17 teeth,
- for a modulus of 30 mm, each ring segment (1) has between 11 and 14 teeth,
- for a modulus of 40 mm, each ring segment (1) has between 8 and 10 teeth.

8. A drive arrangement according to one of Claims 1 to 5,
**characterised in that**
the projection on a face region which protrudes axially and/or on a face region with a radially aligned normal is finish-machined such that determination of true running is made possible by means of measuring sensor, in order to improve the alignment of the ring segments (1) relative to each other.

9. A drive arrangement according to Claim 8,
**characterised in that**
the measuring sensor is a measuring sensor for determining the deviation from true running.

10. A drive arrangement according to one of Claims 1 to 5,
**characterised in that**
on its end regions lying in the peripheral direction the ring segment (1) has end faces with drill holes running tangentially, i.e. in the peripheral direction, into which holes fastening bolts (51) can be introduced for connecting to one further ring segment (1) of the same type in each case.

11. A drive arrangement according to one of Claims 1 to 5,
**characterised in that**
on the ring segment (1) radially beneath the toothing (32) a connecting-web region is designed in sword-like manner [sic], so that the region of connection of the ring segments (1) to each other is provided at a greater radial distance than the region of connection of the ring segments (1) to the part which is to be driven by the gear wheel (2),
or **in that**
the ring segment (1) have [sic] a connecting-web region connecting the end faces, in which cutouts (3) for passing through connecting screws connecting the ring segment (1) to the part which is to be driven are arranged, so that the region of connection of the ring segments (1) to each other and the region of connection of the ring segments (1) to the part which is to be driven by the gear wheel (2) at least cover a common radial distance partial region, i.e. are arranged substantially radially at the same radial distance.

12. A drive arrangement according to Claim 11,
**characterised in that**
in the connecting-web region axially running bores (20) are provided for introducing fastening bolts (51) with which the ring segment (1) can be fastened to a supporting part,
and/or **in that**
the connecting-web region has at least one oval cutout (3) or, viewed from the axial direction, one asymmetrical and one or more symmetrical cutouts (34),
and/or **in that**
the connecting-web region has a plurality of symmetrical cutouts (34) arranged in the peripheral direction one behind the other which are separated by means of substantially radially extending intermediate webs (35), wherein axially aligned bores (20) for fastening to the part which is to be driven are provided in the intermediate webs (35).

13. A drive arrangement according to Claim 12,
**characterised in that**
the supporting part is a drum (53), a ring or a ring segment (1).

14. A drive arrangement according to Claim 11,
**characterised in that**
the ring segment (1) plus toothing (32), end faces and region designed in sword-like manner, i.e. connecting-web region, is formed in one piece.

15. A drum drive, comprising a drum (53) and a driving toothed part (2),
wherein ring segments (1) are provided on the outer periphery of the drum (53) which in each case are fastened to the drum (53),
wherein the ring segments (1) form toothing (32) of a gear wheel (1),
wherein the driving toothed part (2) is engaged with the toothing (32) and the drum (53) is at least partially mounted by way of the toothed part,
**characterised in that**
the ring segments (1) form a drive arrangement according to one of Claims 1 to 14.

16. A drum drive according to Claim 15,
**characterised in that**
the driving toothed part is engaged with the assembled toothing (32) formed by the toothing (32) of the ring segments (1).

17. A drum drive according to Claim 15,
**characterised in that**
at least a first ring or at least ring segments (52) assembled in the peripheral direction which form a first ring are provided on the outer periphery of the drum (53),
and **in that**
further ring segments (50) are provided which are assembled in the peripheral direction to form a further ring and are connected to the first ring or the corresponding ring segments (52),
and **in that**
the ring segments (1) which have toothing (32) are connected to the further ring segments (50).

18. A drum drive according to Claim 17,
**characterised in that**
the first ring or the ring segments (52) forming the first ring are connected by welding to the drum (53).

19. A drum drive according to Claim 17,
**characterised in that**
the further ring segments (50) are connected by welding to the first ring or the corresponding ring segments (52).

20. A drum drive according to Claim 17,
**characterised in that**
the ring segments (1) which have toothing (32) are connected in non-positive manner to the further ring segments (50).

21. A drum drive according to Claim 20,
**characterised in that**
the ring segments (1) which have toothing (32) are connected by screwing to the further ring segments (50).

22. A drum drive according to Claim 16 or 15,
**characterised in that**
bores (20) are provided in connectable ring segments (1), into which bores a bolt is introduced for aligning the ring segments with each other.

23. A drum drive according to Claim 16 or 15,
**characterised in that**
the ring segment (1) beneath the toothing (32) is designed in sword-like manner, at least one cutout (3) is provided in the sword-like region to reduce the mass of the ring segment.

24. A drum drive according to Claim 23,
**characterised in that**
the cutout (3) is spaced apart in the peripheral direction from the circumferential position of the fastening regions.

25. A drum drive according to Claim 24,
**characterised in that**
the cutout (3) is spaced apart in the peripheral direction from the circumferential position of the corresponding drill holes.

## Revendications

1. Ensemble d'entraînement comprenant une partie à entraîner et une roue dentée d'entraînement (2) qui est composée de segments dentés, à savoir des segments annulaires (1), et dont la denture (32), située sur le pourtour extérieur, est formée et composée des dentures desdits segments,
laquelle denture (32) est disposée à l'extérieur dans le sens radial, sur le segment annulaire (1),
ladite denture (32) étant une denture à développante,
ladite denture (32) étant fabriquée en fonte A.D.L,
les segments voisins dans la direction périphérique étant respectivement reliés par vissage, sachant que lesdits segments sont respectivement munis, au niveau de leurs deux régions extrêmes prévues dans la direction périphérique, à savoir des régions de maintien (22), de faces frontales orientées radialement et dotées de trous forés conçus pour recevoir les vis de la liaison vissée,
lesquels trous forés sont orientés tangentiellement,
lesdites régions extrêmes étant reliées au moyen d'une zone (23) formant membrure de liaison,
la partie à entraîner présentant un diamètre extérieur plus petit que celui de la roue dentée d'entraînement,
sachant que les segments sont des segments annulaires (1),
sachant que la liaison vissée inclut, à chaque fois, au moins deux vis d'ajustement servant à l'orientation réciproque desdits segments annulaires (1), et au moins deux vis de fixation (51),
**caractérisé par le fait que**
le segment annulaire (1) est pourvu d'une saillie s'étendant dans la direction périphérique, à savoir d'un gradin (40), de façon telle qu'un gradin (40) s'étendant dans la direction périphérique soit ménagé, à l'issue de l'assemblage des segments annulaires (1), sur le pourtour de la roue dentée ainsi formée,
ladite saillie étant située à une moindre distance radiale qu'une denture (32) prévue sur le segment annulaire (1),
laquelle saillie dépasse axialement au-delà de la zone de la surface du segment annulaire par laquelle elle est entourée,
- sachant que la roue dentée (2) est composée de N segments, le nombre N étant compris entre 7 et 25,
- et sachant que la denture (32) de ladite roue dentée (2) comporte un module m, et chaque segment compte z dents, le produit z x m présentant une valeur située dans la plage comprise entre 340 mm et 440 mm.

2. Ensemble d'entraînement selon la revendication 1,
**caractérisé par le fait que**
la partie à entraîner est un tambour (53) ou un arbre.

3. Ensemble d'entraînement selon au moins l'une des revendications précédentes,
**caractérisé par le fait que**
la liaison vissée inclut, à chaque fois, au moins trois ou quatre vis de fixation (51).

4. Ensemble d'entraînement selon au moins l'une des revendications précédentes,
**caractérisé par le fait que**
les vis de fixation (51) sont des boulons.

5. Ensemble d'entraînement selon au moins l'une des revendications précédentes,
**caractérisé par le fait que**
la saillie est située à une moindre distance radiale que le diamètre de pied de la denture (32).

6. Ensemble d'entraînement selon au moins l'une des revendications précédentes,
**caractérisé par le fait que**
le module mesure entre 10 et 100 mm.

7. Ensemble d'entraînement selon au moins l'une des revendications précédentes,
**caractérisé par le fait que**
la roue dentée (2) présente un module, étant précisé que,
- dans le cas d'un module de 20 mm, chaque segment annulaire (1) compte entre 17 et 22 dents,
- dans le cas d'un module de 25 mm, chaque segment annulaire (1) compte entre 13 et 17 dents,
- dans le cas d'un module de 30 mm, chaque segment annulaire (1) compte entre 11 et 14 dents,
- dans le cas d'un module de 40 mm, chaque segment annulaire (1) compte entre 8 et 10 dents.

8. Ensemble d'entraînement selon l'une des revendications 1 à 5,
**caractérisé par le fait**
**qu'**au niveau d'une zone de surface dépassant axialement, et/ou au niveau d'une zone de surface dont la normale est orientée radialement, la saillie est soumise à un usinage de précision propre à permettre une détermination de concentricité, au moyen de palpeurs de mesure, afin d'améliorer l'orientation réciproque des segments annulaires (1).

9. Ensemble d'entraînement selon la revendication 8,
**caractérisé par le fait que**
le palpeur de mesure est un palpeur mesureur affecté à la détermination de l'écart de concentricité.

10. Ensemble d'entraînement selon l'une des revendications 1 à 5,
**caractérisé par le fait que**
le segment annulaire (1) est nanti, au niveau de ses régions extrêmes situées dans la direction périphérique, de faces frontales munies de trous forés s'étendant tangentiellement, à savoir dans ladite direction périphérique, dans lesquels des vis de fixation (51) peuvent être insérées en vue de la liaison avec un autre segment annulaire (1) respectivement de même type.

11. Ensemble d'entraînement selon l'une des revendications 1 à 5,
**caractérisé par le fait**
**qu'**une zone formant membrure de liaison et configurée à la manière d'un glaive est ménagée radialement sur le segment annulaire (1), au-dessous de la denture (32), de façon telle que la zone de liaison mutuelle des segments annulaires (1) soit prévue à une plus grande distance radiale que la zone de liaison desdits segments annulaires (1) avec la partie devant être entraînée par la roue dentée (2) ;
ou par le fait que
le segment annulaire (1) comporte une zone de liaison reliant les faces frontales, dans laquelle des évidements (3) sont pratiqués en vue du passage de vis de liaison reliant ledit segment annulaire (1) à ladite partie devant être entraînée, de façon telle que ladite zone de liaison mutuelle des segments annulaires (1), et ladite zone de liaison desdits segments annulaires (1) avec ladite partie devant être entraînée par la roue dentée (2), viennent au moins en recouvrement d'une région partielle commune de distance radiale, c'est-à-dire se trouvent radialement, pour l'essentiel, à une même distance radiale.

12. Ensemble d'entraînement selon la revendication 11,
**caractérisé par le fait que**
des perçages (20) s'étendant axialement sont prévus, dans la zone formant membrure de liaison, pour l'insertion de vis de fixation (51) par lesquelles le segment annulaire (1) peut être fixé à une partie de support ;
et/ou **par le fait que**
ladite zone formant membrure de liaison est pourvue d'au moins un évidement ovale (3) ou, en observant dans le sens axial, d'un évidement asymétrique et d'un ou plusieurs évidement(s) symétrique(s) (34) ;
et/ou **par le fait que**
ladite zone formant membrure de liaison est dotée de plusieurs évidements symétriques (34) agencés en succession dans la direction périphérique et séparés au moyen de membrures intermédiaires (35) s'étendant pour l'essentiel dans le sens radial, des perçages (20), orientés axialement, étant prévus dans lesdites membrures intermédiaires (35) pour la fixation à la partie devant être entraînée.

13. Ensemble d'entraînement selon la revendication 12,
**caractérisé par le fait que**
la partie de support est un tambour (53), un anneau ou un segment annulaire (1).

14. Ensemble d'entraînement selon la revendication 11,
**caractérisé par le fait que**
le segment annulaire (1) est façonné d'un seul tenant conjointement à la denture (32), aux faces frontales et à la zone configurée à la manière d'un glaive, c'est-à-dire à la zone formant membrure de liaison.

15. Entraînement de tambour, comprenant un tambour (53) et une partie dentée d'entraînement (2),
des segments annulaires (1), respectivement fixés au tambour (53), étant prévus sur le pourtour extérieur dudit tambour (53),
lesquels segments annulaires (1) forment une denture (32) d'une roue dentée (2),
sachant que ladite partie dentée d'entraînement (2) est en prise avec ladite denture (32) et que ledit tambour (53) est monté, au moins partiellement, par l'intermédiaire de ladite partie dentée,
**caractérisé par le fait que**
les segments annulaires (1) constituent un ensemble d'entraînement conforme à l'une des revendications 1 à 14.

16. Entraînement de tambour selon la revendication 15,
**caractérisé par le fait que**
la partie dentée d'entraînement est en prise avec la denture (32) formée par la denture (32) des segments annulaires (1) assemblés.

17. Entraînement de tambour selon la revendication 15,
**caractérisé par le fait**
**qu'**un moins un premier anneau, ou au moins des segments annulaires (52) assemblés dans la direction périphérique et formant un premier anneau, est (sont) prévu(s) sur le pourtour extérieur du tambour (53) ;
et par
la présence de segments annulaires (50) supplémentaires, qui sont assemblés dans la direction périphérique pour constituer un anneau supplémentaire, et sont reliés audit premier anneau ou aux segments annulaires (52) correspondants ;
et par le fait que
les segments annulaires (1) pourvus d'une denture (32) sont reliés auxdits segments annulaires (50) supplémentaires.

18. Entraînement de tambour selon la revendication 17,
**caractérisé par le fait que**
le premier anneau, ou les segments annulaires (52) formant ledit premier anneau, est (sont) relié(s) au tambour (53) par soudage.

19. Entraînement de tambour selon la revendication 17,
**caractérisé par le fait que**
les segments annulaires (50) supplémentaires sont reliés, par soudage, au premier anneau ou aux segments annulaires (52) correspondants.

20. Entraînement de tambour selon la revendication 17,
**caractérisé par le fait que**
les segments annulaires (1) pourvus d'une denture (32) sont reliés par engagement positif aux segments annulaires (50) supplémentaires.

21. Entraînement de tambour selon la revendication 20,
**caractérisé par le fait que**
les segments annulaires (1) pourvus d'une denture (32) sont reliés par vissage aux segments annulaires (50) supplémentaires.

22. Entraînement de tambour selon la revendication 16 ou 15,
**caractérisé par**
la présence, dans des segments annulaires (1) se prêtant à une liaison, de perçages (20) dans lesquels un boulon est inséré en vue de l'orientation réciproque desdits segments annulaires.

23. Entraînement de tambour selon la revendication 16 ou 15,
**caractérisé par le fait que**
le segment annulaire (1) est configuré à la manière d'un glaive au-dessous de la denture (32), au moins un évidement (3) étant prévu, dans la zone du type glaive, afin de réduire la masse dudit segment annulaire.

24. Entraînement de tambour selon la revendication 23,
**caractérisé par le fait que**
l'évidement (3) est situé, dans la direction périphérique, à distance de l'emplacement que les zones de fixation occupent sur le pourtour.

25. Entraînement de tambour selon la revendication 24,
**caractérisé par le fait que**
l'évidement (3) est situé, dans la direction périphérique, à distance de l'emplacement que les trous forés correspondants occupent sur le pourtour.
